**Europäisches Patentamt**

**European Patent Office**

**Office européen des brevets**

(11) Publication number: **0 021 691**
**B1**

(12) **EUROPEAN PATENT SPECIFICATION**

(45) Date of publication of patent specification: **18.05.83**

(21) Application number: **80301920.7**

(22) Date of filing: **06.06.80**

(51) Int. Cl.³: **B 21 D 51/46**

(54) Process for preparation of vessel closures provided with liners and bottles sealed by such closures.

(30) Priority: **08.06.79 JP 71148/79**

(43) Date of publication of application:
**07.01.81 Bulletin 81/1**

(45) Publication of the grant of the patent:
**18.05.83 Bulletin 83/20**

(84) Designated Contracting States:
**BE CH DE FR GB IT LI NL SE**

(56) References cited:
**EP - A - 0 012 314**
**US - A - 2 881 480**
**US - A - 2 963 738**
**US - A - 3 493 453**
**US - A - 3 827 843**
**US - A - 4 088 730**

(73) Proprietor: **JAPAN CROWN CORK CO. LTD.**
**31-5 Shinbashi 4-chome**
**Minato-ku, Tokyo (JP)**

(72) Inventor: **Mori, Fumio**
**1252-13, Fukaya-cho**
**Totsuka-ku Yokohama-shi Kanagawa-Ken (JP)**
Inventor: **Itsubo, Junichi**
**479, Okazaki**
**Hiratsuka-shi Kanagawa-ken (JP)**
Inventor: **Matsuda, Gunji**
**1731-35, Takamori**
**Isehara-shi Kanagawa-ken (JP)**
Inventor: **Hirano, Toru**
**451-1, Guzo**
**Hiratsuka-shi Kanagawa-ken (JP)**
Inventor: **Sato, Hideki**
**401, Nagamochi**
**Hiratsuka-shi Kanagawa-ken (JP)**

(74) Representative: **Myerscough, Philip Boyd et al,**
**J.A.Kemp & Co. 14, South Square Gray's Inn**
**London, WC1R 5EU (GB)**

Courier Press, Leamington Spa, England.

# 0 021 691

Process for preparation of vessel closures provided with liners and bottles sealed by such closures

The present invention relates to a process for making vessel closures provided with liners and to vessels, more particularly bottles, sealed by such closures.

Crowns, caps and other closures having a liner or packing of rubber, resin, paper or cork have been widely used as vessel closures for sealing bottled products. Low density polyethylene or a vinyl chloride resin can be readily shaped to provide liners which are good seals and possess the ability to retain the flavour or taste of a drink or the like in a bottle. The manufacturing costs of vessel closures provided with such liners are relatively small. Accordingly, the demand for these vessel closures has recently been increasing.

Various processes are known for the preparation of vessel closures provided with liners. These include a technique involving supplying a mass of a melt of a thermoplastic resin to the inner face of a vessel closure shell and pressing the mass between a cooled pressing mould and the closure shell to form a liner (see Japanese Patent Publication No. 5588/66) and a technique comprising supplying a preformed thermoplastic resin to the inner face of a vessel closure shell, heating the closure shell to soften the thermoplastic resin and pressing the softened resin between a cooled pressing mould and the closure shell to form a liner (see Japanese Patent Publication No. 5706/73).

Liners should be tightly stuck to and engaged with the mouth portions of vessels. Accordingly, it is preferred that one or more annular projections or concave grooves be formed on the peripheral portion of the liner to engage the mouth portion of a vessel.

Conventional press moulding processes for the preparation of liners are advantageous because the moulding of the thermoplastic resin mass into a liner and the attachment of the liner to a vessel closure shell can be performed simultaneously. However, it has been found that these liners are often inferior to disc-like packings formed by punching the discs out of sheets possessing the properties, especially the sealing and adhesion properties, required for liners.

More specifically, when a vessel closure provided with a liner formed by press moulding is used for sealing a bottled product, micro-cracks are formed in the liner, especially the peripheral portion of the liner which is important as regards the sealing properties of the vessel closure. The micro-cracks can be formed by the compressive force applied to the liner, contact between the liner and the contents of the vessel and/or the high temperature used during sterilization or pasteurization. Adhesion of the liner to the vessel closure shell is reduced while the vessel closure is stored, and also once the vessel closure has been applied to a bottle.

We have found that the occurrence of such undesirable phenomena as crack formation and the reduction in adhesion with time are especially conspicuous in wide-mouthed vessel closures having a large diameter, when press moulding of a liner is carried out at high speed or when annular projections or concave grooves are formed in the peripheral portion of a liner. Accordingly, conventional vessel closures provided with a resin liner formed by press moulding may not possess satisfactory sealing properties, a high liner peel strength or a high resistance to heat treatment, although the resin *per se* has good characteristics.

As a result of our research into the causes of the cracking of a resin liner formed by press moulding (which may be called "stress cracking" because the cracking takes place under environmental conditions where the liner is placed) and of the reduction in the adhesion of the liner to a vessel closure shell with time, we have found that when the resin is spread and moulded under cooling conditions when it is press moulded, the molecules in the surface of the liner, especially in the peripheral portion of the surface, orientate. This results in a residual stress in the liner.

We have now found that these problems can be overcome, when producing a vessel closure provided with a liner having a projecting peripheral sealing portion by press-moulding a mass of a thermoplastic resin onto the inner face of a vessel closure shell, by locating a mass of a thermoplastic resin composition containing 0.01 to 10% by weight of a lubricant on the inner face of the vessel closure shell, spreading the mass on the inner face by means of a punch which is maintained at an elevated temperature so that the mass is molten when spread, and press-moulding the spread mass by means of a cooled punch to form a liner in which the thickness of the peripheral sealing portion is greater than the thickness of the central portion, if any.

As a result, molecular orientation in the surface of the liner and thus the occurrence of a residual stress in the liner can be inhibited. Stress cracking and the reduction in the adhesion of the liner to the vessel closure shell with time can be prevented. The sealing property and peel resistance of the liner can be improved. Effective sealing can occur even after heat treatment.

In the present invention, the thermoplastic resin composition used to form the liner contains a lubricant. When the thermoplastic resin composition is press-mouled by a cooled punch to form a liner in which the thickness of the peripheral portion of the liner is larger than that of its central portion, the lubricant in the liner distributes itself in a manner not observed in any liner attached to a vessel closure shell by conventional methods. More specifically, in vessel closures provided with liners in accordance with the present invention, the lubricant is distributed predominantly in the surface of the thick peripheral portion of the liner. It is this portion of the liner which contacts the mouth of a vessel and thus seals the vessel. In other words, migration of the lubricant from the central portion of the liner into the contents of the vessel, which will contact that portion of the liner, can be markedly reduced. The torque required to open a vessel sealed with such a vessel closure can be much reduced and the vessel can be opened more easily.

In the description which follows, reference will be made by way of example to the accompanying drawings in which:

Fig. 1 illustrates the step of providing a mass of molten resin in a shell of a vessel closure in accordance with the process of the present invention,

Fig. 2 illustrates the step of spreading the mass of resin in Figure 1 by a hot punch in accordance with the process of the present invention,

Fig. 3 is a section through the resin spread in Figure 2 together with the vessel closure shell,

Figure 4 illustrates the step of press-moulding the spread resin shown in Figure 3 in accordance with the process of the present invention,

Fig. 5 is a partial section through a pilfer-proof cap provided with a liner in accordance with the present invention, and

Fig. 6 is a partial section through a screw cap provided with a liner in accordance with the present invention.

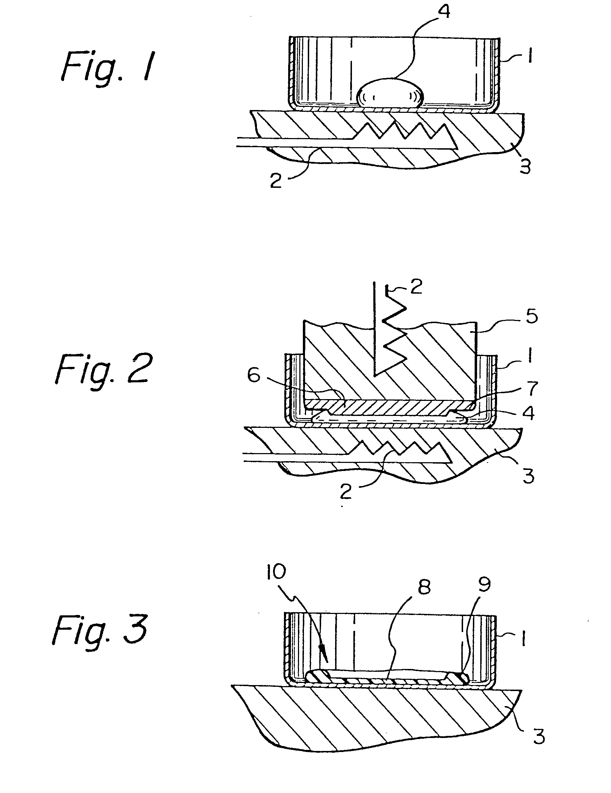

Referring to Fig. 1 which illustrates the first step of the process of the present invention, a wide-mouthed vessel closure shell 1 is supported by an anvil 3 heated by a heating mechanism such as an electric heater 2. A mass 4 of a molten resin is supplied to the interior of the vessel closure shell 1 through a die and rotary cutter (not shown) of an extruder. Alternatively, a mass of a solidified resin or a mass of a resin pre-heated at a temperature lower than the melting temperature of the resin can be supplied into the shell 1 and heated in the shell 1 by appropriate heating means such as electric induction heating, infrared heating or oven heating to form a molten or softened resin mass. It is preferred that the resin mass 10 adheres to the shell 1 under heating.

The shell 1 containing the mass 4 of molten resin is fed to the melt-spreading operation (hot pressing operation) station shown in Fig. 2. The shell 1 is supported by an anvil 3 heated by a heating mechanism, and a pressing mould 5 (punch) located above the anvil 3 is brought down to press the melt 4 and spread it on the inner face of the shell. In order to spread the resin in the molten state, the punch 5 is maintained at an elevated temperature. Accordingly, the punch 5 is provided with a heating mechanism such as an electric heater 2. In order to prevent the molten resin 4 from adhering to the punch 5, the surface of the punch 5 is provided with a layer 6 of a parting substance at least in the portion falling in contact with the resin.

In the case where a thick sealing portion is formed around the periphery of the liner, a punch 5 having a stepped notch or concave portion 7 around the periphery of its pressing face (operating face) is used, and preferably, a preformed resin article 10 having a thin central portion 8 and a thick peripheral portion 9 as shown in Fig. 3 is prepared.

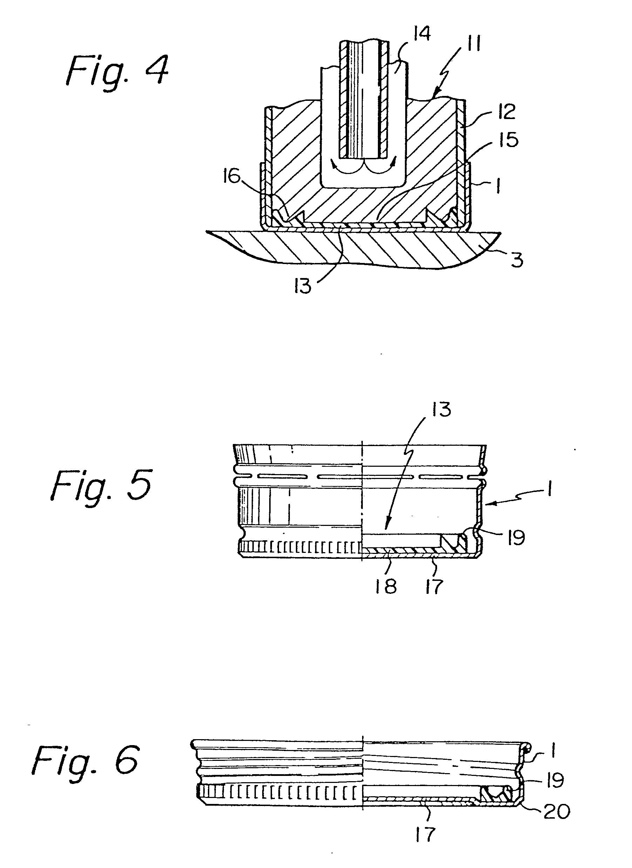

The shell 1 containing the preformed article 10 of the resin melt is then supplied to a cold moulding (cold pressing) operation station shown in Fig. 4. The shell 1 is supported by an anvil 3 which is not heated. A pressing mould 11 (punch) and a sleeve 12, which are located above the anvil 3, are brought down to mould the preformed resin 10 to a final liner 13. A cooling mechanism 14 is arranged in the pressing mould 11. On the pressing face of the mould 11, a flat or smoothly curved central surface portion 15 is provided for forming a thin central portion of the liner and a peripheral annular concave or notched portion 16 is provided for forming a thick sealing peripheral portion of the liner.

Referring to Fig. 4, the sleeve 12 is first engaged with the inner circumferential edge of the skirt of the shell to hold the shell 1 tightly. The pressing mould 11 is promptly brought down to press the preformed article of the molten resin. Thus, the preformed resin is completely press-moulded into a liner 13. The mould 11 is maintained pressing down on the liner 13 for a certain period of time. The liner 13 is gradually cooled in contact with the mould 11, if necessary with the aid of a cooling mechanism disposed in the anvil 3, whereby a solidified liner is obtained. The sleeve 12 and pressing mould 11 are raised and a vessel closure provided with a liner 15 is withdrawn. The pressing mould is advantageously cooled by ordinary tap water or by chilled water. Of course, other gaseous or liquid cooling media may be used.

In order to prevent orientation of molecules of the resin of the liner and to thermally bond the liner to the vessel closure shell whilst effectively eliminating residual stress, it is very important that the resin should be spread in the shell 1 while keeping it molten by means of the heated pressing mould 5 to prepare a partially formed molten resin liner and that this partially formed liner should be then press-moulded under cooling.

In conventional processes for the preparation of vessel closures provied with liners, since a mass of a molten thermoplastic resin is pressed under cooling and is simultaneously spread and shaped, in-plane orientation owing to plastic deformation is inevitably caused in the surface of the liner in contact with the surface of the pressing mould. This in-plane orientation is prominent in the peripheral portion of the liner and is larger than in the central portion of the liner where the degree of deformation is low. When an annular sealing projection is formed in the peripheral portion of the liner to engage the mouth of a bottle, in order to form such projections with high accuracy, it is necessary to register the surface

3

configuration of the liner precisely with the surface configuration of the pressing mould by forcibly cooling the pressing mould by a low-temperature cooling medium such as chilled water to reduce the surface temperature to a level as low as possible and by controlling the pressing speed of the pressing mold to a level as low as possible. Accordingly, in this case, the degree of in-plane orientation in the sealing peripheral portion of the liner is particularly increased.

In case of a liner where a great difference is observed between the value of the in-plane orientation index in the central and the peripheral portions of the liner, as illustrated in Comparative Examples described hereinafter, cracks are not formed in the liner when it is prepared. However, when the liner is subjected to an accelerated cracking resistance test, cracks are formed in a very short time and when the liner is applied to seal a bottled product and is subjected to a pressure resistance test, cracks are formed at a very high frequency by the compressive force, contact with the contents of the bottle and the temperature conditions.

In conventional processes, furthermore, since spreading and thermal bonding of the resin to the vessel closure shell are simultaneously carried out under cooling, it is often difficult to attain uniform and sufficient bonding between the liner and the shell. It is impossible to prevent stress from remaining in the liner bonded to the shell. In such vessel closures, although the strength of the bonding of the liner to the shell is sufficient when the vessel closure is prepared, during storage or transportation or when the vessel closure is actually subjected to a bottle-sealing test, a drastic reduction in adhesion can be caused because of the residual stress in the liner, resulting in occurrence of problems such as the liner falling off from the shell.

In contrast, according to the present invention, by performing a preforming operation using a hot press, molecular orientation in the entire surface of the liner, especially in the peripheral sealing portion, can be inhibited. The liner can be thermally bonded to a shell uniformly and sufficiently without any residual stress. In an accelerated cracking test, the 50% crack-forming time can be prolonged to a level more than 5 times as long as in conventional products. In a heat resistance test when the vessel closures are applied to bottles, the formation of cracks in the liner can be completely prevented and problems such as the falling off of the liner because of a reduction in its adhesion to the shell over a period of time is not observed.

In the present invention, a punch is used at the hot pressing step for melting and spreading the resin. This punch is maintained at an elevated temperature, i.e. temperature at which the resin in contact with the punch is kept in the molten state. In order to ensure that this state is maintained, it is preferred that the effective surface temperature of the punch is higher than the Vicat temperature of the resin (as determined according to ASTM D-1525).

From the viewpoints of its ability to part from the thermoplastic resin used to form the liner and its mechanical characteristics, a fluorine resin, especially polytetrafluoroethylene is preferred as the parting substance to prevent the punch from sticking to the molten resin. Other substances such as silicone resins may be used. The punch may be formed completely of such a substance which does not stick to the thermoplastic resin of the liner or only the surface of the punch may be coated with it.

A metal foil having a thickness of $10^{-6}$ to $10^{-4}$m (1 to 100 microns), preferably $5 \times 10^{-6}$ to $10^{-4}$m (5 to 100 microns), or a metal sheet having a thickness larger than $10^{-4}$m (100 microns), may be used as the metal material constituting the vessel closure shell. The kind of the metal material is not particularly critical. Foils and sheets of non-surface-treated steel (black plate), surface-treated steel and light metals such as aluminum may be used. Suitable examples of surface-treated steel are steel foils or sheets the surfaces of which have been subjected to a chemical treatment such as a phosophoric acid treatment or a chromic acid treatment, an electrolytic treatment such as an electrolytic chromic acid treatment or an electrolytic tin plating treatment or a melting plating treatment such as a molten tin plating treatment.

At least one layer of a known protective paint or a primer paint for thermal bonding the liner to the vessel closure shell may be formed on the surface of the metal material. At least one of phenol-epoxy paints, epoxy-urea paints, epoxy-melamine paints, phenol-epoxy-vinyl paints, epoxy-vinyl paints, vinyl chloride-vinyl acetate copolymer paints, vinyl chloride-vinyl acetate-maleic anhydride copolymer paints, unsaturated polyester paints and saturated polyester resins is preferably used as the protective paint. In the case where the protective paint has no adhesiveness to the thermoplastic resin of the liner, a primer paint for the thermal bonding of the liner to the vessel closure shell may be applied to the metal substrate directly or through a protective paint such as mentioned above. For example, when the liner-forming resin is an olefin resin, a known primer paint for thermal bonding of olefin resins, such as a paint comprising oxidized polyethylene or an acid-modified olefin dispersed in a film-forming resin, may be advantageously used. If the liner-forming resin is a vinyl chloride resin, a vinyl resin paint or modified vinyl resin paint such as mentioned above may be used.

Such coated metal substrates are formed into a vessel closure. These can have a variety of shapes. The vessel closures may be crowns, pilfer-proof caps, screw caps, twist-off caps, lug caps or easy-open caps. The process of the present invention is especially advantageous when applied to the manufacture of wide-mouthed vessel closures provided with liners. According to the process of the present invention, a liner can be advantageously formed on a vessel closure shell having a diameter larger than $3.8 \times 10^{-2}$m (38 mm), to which application of a liner is difficult by conventional cold pressing

4

techniques using molten polyethylene. Of course, the process of the present invention can be conveniently applied to vessel closures having a smaller diameter.

Any thermoplastic resin which is melt-moldable and possesses the cushioning property required for a liner can be used as the liner-forming thermoplastic resin. At least one member selected from olefin resins such as polyethylene, polypropylene, ethylene-propylene copolymers, ethylene-vinyl acetate copolymers, ethylene-acrylic acid ester copolymers and ionomers is especially advantageously used as the thermoplastic resin. Other soft vinyl chloride resins may be used.

The thermoplastic resin especially suitable for use in the present invention is low density polyethylene or an ethylene-containing copolymer. From the viewpoint of the characteristics of the resulting liner, it is preferred to use a composition formed by blending in low density polyethylene at least one of (a) an ethylene-propylene copolymer and (b) a thermoplastic elastomer, especially a styrenediene (butadiene or isoprene)-styrene copolymer. It is preferred that such modifying component be incorporated in an amount of 3 to 40% by weight based on low density polyethylene.

The process of the present invention is advantageous in that a thermoplastic resin having a low melt-flowability, that cannot be processed easily according to conventional processes, can be conveniently used for formation of a liner. For example, polyethylene having a small melt index (M. I.) has *per se* a small tendency to undergo stress cracking. However, in liners formed from this polyethylene according to conventional methods, in-plane orientation becomes excessive in the peripheral portion of the liner and stress cracking is inevitably caused. In contrast, if the resin is spread in the molten state according to the present invention, polyethylene having *per se* a small tendency to undergo stress cracking can be used. It is ordinarily preferred that the melt index of low density polyethylene be in the range of from $1.66 \times 10^{-7}$ to $3.33 \times 10^{-5}$ Kg/s (0.1 to 20 g/10 min).

In order to reduce the opening torque and improve the ease with which vessels can be opened, the thermoplastic resin composition contains a lubricant. Examples of the lubricant are as follows:

(1) Aliphatic hydrocarbon lubricants such as liquid paraffin, white mineral oil of industrial grade, synthetic paraffin, petroleum wax and non odorous light hydrocarbons.

(2) Silicone lubricants such as organopolysiloxanes.

(3) Fatty acids, aliphatic alcohols and higher fatty acids having 8 to 22 carbon atoms, such as fatty acids prepared from animal or vegetable oils and fats or products obtained by hydrogenation of these fatty acids, hydroxystearic acid, linear aliphatic monohydric alcohols having at least 4 carbon atoms, which are obtained by reducing an animal or vegetable oil and fat or a fatty acid ester thereof or by fractional decomposition of a natural wax, and dodecyl alcohol.

(4) Polyglycol lubricants such as polyethylene glycol having a molecular weight of 200 to 9,500, polypropylene glycol having a molecular weight of at least 1,000 and polyoxypropylene-polyoxyethylene block copolymer having a molecular weight of 1,900 to 9,000.

(5) Amide or amine lubricants such as higher fatty acid amides, oleyl palmitamide, 2-stearamidoethyl stearate, styrene-bis-fatty acid amide, N,N'-oleylstearylethylene diamine, N,N'-bis-(2-hydroxyethyl)-alkyl amide having 12 to 18 carbon atoms in the alkyl moiety, N,N'-bis-(hydroxyethyl)-lauramide, a reaction product of oleic acid with an N-alkyl-trimethylene diamine having 16 to 18 carbon atoms in the alkyl moiety and a stearic acid diester of di-(hydroxyethyl)-diethylene triamine monoacetate.

(6) Fatty acid esters of monohydric and polyhydric alcohols such as n-butyl stearate, methyl ester of hydrogenated rosin, di-n-butyl sebacate, 2-ethylhexyl sebacate, di-n-octyl sebacate, glycerin fatty acid esters, glyceryl lactostearate, pentaerythritol stearate, pentaerythritol tetrastearate, sorbitan fatty acid esters, polyethylene glycol fatty acid esters, polyethylene glycol monostearate, polyethylene glycol dilaurate, polyethylene glycol mono-oleate, polyethylene glycol dioleate, polyethylene glycol coconut fatty acid ester, polyethylene glycol tall oil fatty acid ester, ethane diol montanate, 1,3-butane diol montanate, diethylene glycol stearate and propylene glycol fatty acid esters.

(7) Triglycerides and waxes such as hydrogenated edible oils and fats, cotton seed oil, other edible oils, linseed oil, palm oil, glycerin 12-hydroxystearate, hydrogenated fish oils, spermaceti wax, montan wax, carnauba wax, bees wax, haze wax and esters of monohydric alcohols with aliphatic saturated acids, e.g. hardened whale oil, lauryl stearate and stearyl stearate.

(8) Alkali metal, alkaline earth metal, zinc and aluminum salts of high fatty acids (metal soaps).

(9) Low-molecular-weight olefin resins such as low-molecular-weight polyethylene, low-molecular-weight polypropylene and oxidised polyethylene.

(10) Fluorine resins such as polytetrafluoroethylene, tetrafluoroethylene/hexafluoroethylene copolymers, polychlorotrifluoroethylene and polyvinyl fluoride.

(11) Other lubricants such as propylene glycol arginate, dialkyl ketones and acryl copolymers (for example, Modaflow manufactured by Monsanto Co.).

This list is not exhaustive and other lubricants can be used. The lubricants are incorporated in amounts of 0.01 to 10% by weight, preferably 0.05 to 5% by weight, especially preferably 0.1 to 1.0% by weight, based on the thermoplastic resin.

Known additives may be incorporated at known mixing ratios into the thermoplastic resin. For example white and colouring pigments such as titanium white and carbon black, fillers such as calcium

5

carbonate, white carbon and clay, antioxidants, plasticizers, antistatic agents and thermal stabilizers can be added.

The form of the molten resin fed into the vessel closure shell is not particularly critical. For example, the molten resin may be fed in the form of a pellet, a dice, a tablet, doughnut (ring-like shape), a disc, a sphere, a hemisphere or a strand.

The amount of the resin supplied into one vessel closure shell may ordinarily be decided in the range of from $10^{-4}$ to $10^{-2}$Kg (100 mg to 10 g). The amount will differ depending on the size of the shell.

The degree of spreading of the resin in the molten state is not particularly critical, so far as excessive in-plane orientation in the final liner is prevented. Ordinarily, the molten resin is spread over an area corresponding to at least 1/8, preferably at least 1/4, especially preferably at least 1/2, of the projection area of the final liner. The spreading operation by using a hot press may be carried out in one or two stages.

The process of the present invention is especially advantageously applied to the manufacture of broad vessel closures provided with liners, for example, a wide-mouthed pilfer-proof cap shown in Fig. 5. Referring to Fig. 5, the closure comprises a wide-mouthed cap shell 1 and a liner 13 composed of a lubricant-containing thermoplastic resin composition which is thermally bonded to the inner face of the top plate of the shell 1 through an appropriate primer coating (not shown). This liner 13 comprises a relatively thin central portion 18 and a relatively thick sealing peripheral portion 19. According to the moulding process of the present invention, the distribution of the lubricant in the surface of the central portion 18 which will be in contact with the contents of a vessel is reduced but the distribution of the lubricant in the surface of the peripheral portion 19 which will be in contact with a bottle mouth is increased. Therefore, the torque required to open a bottle can be reduced whilst migration of the lubricant into the contents of the bottle is controlled. The reason why there is such a specific distribution of the lubricant in the liners of vessel closures prepared according to the present invention has not been completely elucidated. However, it is believed that if the resin in the molten state is first spread and is then press-moulded under cooling, crystallization of the resin is inhibited in the thin central portion 18 by rapid cooling to control blooming of the lubricant in the central portion 18, while in the thick peripheral portion 19, since the portion 19 is gradually cooled, crystallization of the resin is advanced and blooming of the lubricant is caused to occur.

In a vessel closure prepared according to the present invention, as in case of the screw cap shown in Fig. 6, a liner 19 may be applied only to a peripheral annular concave portion 20 of the cap shell 1. In this case, resin is supplied to the concave portion 20 in the form of one or a plurality of masses or a continuous ring. The melting-spreading operation and the cooling moulding are carried out in the same manner as described above.

Various changes and modifications may be made to the embodiments described above. For example, a projecting rib or concave groove having an optional sectional shape, which is preferred for attaining a good seal, may be formed on the peripheral sealing portion of liner, or both such projecting rib and concave groove may be formed on the peripheral sealing portion. Also when a peripheral sealing portion having a complicated shape and a thickness much larger than the thickness of the central portion is formed, the advantages associated with the present invention can be attained.

The following Examples 1 to 3 illustrate the present invention:

Example 1

An anti-corrosive primer lacquer comprising 70 parts by weight of a vinyl chloride-vinyl acetate copolymer, 25 parts by weight of a bisphenol A type epoxy resin and 5 parts by weight of an amino resin in an organic solvent was roll-coated on an aluminum plate having a thickness of $2.4 \times 10^{-4}$m (0.24 mm) (manufactured by Sumitomo Keikinzoku Kogyo Kabushiki Kaisha) and the coated aluminum plate was heated at 190°C. for 10 minutes to form an anti-corrosive primer lacquer layer. A primer composition comprising 70 parts by weight of an epoxy resin, 10 parts by weight of a urea resin and 20 parts by weight of maleic acid-modified polyethylene in an organic solvent was coated as an adhesive paint on the so formed lacquer layer and the coating was heated at 200°C. for 10 minutes to form a coated plate. Then, the coated plate was shaped into a cap shell having a diameter of $2.8 \times 10^{-2}$m (28 mm) so that the coated surface was located on the inner side. The so formed cap shell (called a "28 mm pp cap") was heated at 190°C. by a high-frequency heating device. A liner-forming material molten under the conditions shown in Table 1 was fed into the heated cap shell by an extruder. For this purpose the molten resin is cut into a small mass by a rotary cutter.

A homogeneous blend comprising 95 parts by weight of high density polyethylene (HDPE) having a density of $9.2 \times 10^2$ Kg/m³ (0.92 g(cc) and a melt index (M.I.) of 8.0, 5 parts by weight of butyl rubber, 0.5 part by weight of stearic acid amide as a lubricant and 0.5 part by weight of stearic acid monoglyceride was used as the material from which the liner is formed.

The small mass of molten resin was pressed (spread) into a predetermined thickness by a first pressing mould under conditions shown in Table 1, and was then further pressed by a second pressing mould to form a liner in the cap. The liner-moulding conditions are shown in Table 1.

The so obtained cap was tested and evaluated according to the following methods.

6

Test (1): Difference of in-plane orientation index and balance difference

The liner was peeled off from each cap, the molecular orientation coefficient l (in the radial direction) and the molecular orientation coefficient m (in the circumferential direction) were determined with respect to each of the central portion of the liner and the peripheral portion (the portion falling in contact with an annular projection closer to the central portion of the cap) of the liner according to the polarimetric fluorometric method (FOM). From these coefficients, the in-plane orientation index difference and the balance difference were calculated according to the following formulae:

$$\text{In-plane orientation index difference} = I_0^P - I_0^C$$
$$\text{Balance difference} = D_B^P - D_B^C$$

$I_0$:     $l + m$

$I_0^P$:     in-plane orientation index in the peripheral portion of the liner

$I_0^C$:     in-plane orientation index in the central portion of the liner

$D_B$:     $|l - m|$

$D_B^P$:     balance in the peripheral portion of the liner

$D_B^C$:     balance in the central portion of the liner

Test (2): Peel strength

The peel strength between the liner and the cap was determined at a peeling speed of $8.33 \times 10^{-4}$ m/s (50 mm/min), a temperature of 20°C. and a peeling angle of 90° by using a Tensilon tensile tester.

Test (3): Resistance to stress cracking

A 0.1% solution of Liponox (a non-ionic surface active agent manufactured by Lion Yushi Kabushiki Kaisha) was used as a cracking promotor and maintained at 50°C. in a thermostat tank. The side face of the cap shell was removed and the cap was bent by 90° so that the liner portion was located on the front side. The cap was dipped in the 0.1% solution of Liponox and the surface of the liner was observed by a microscope. The time (F50) required for formation of cracks in 50% of tested samples was measured.

Test (4): Adaptability to operation

Operation adaptability was evaluated based on the moulding and adhesion state of the cap having in the shell thereof a liner having a predetermined shape (a convex annular shape capable of pressing the bottle mouth from the inner and outer sides thereof).

⊚: good adhesion and precisely formed annular shape
○: good adhesion but relatively incomplete annular shape
△: slight peeling in the peripheral portion of the liner and incomplete annular shape
×: prominent peeling in the peripheral portion of the liner

Test (5): Durable pressure resistance

Dilute sulphuric acid was prepared by diluting $4.05 \times 10^{-2}$ Kg (40.5 g) of concentrated sulphuric acid (98%) with $7.57 \times 10^{-3}$ m³ (7.57 l) of water, and $10^{-4}$ m³ (100 ml) of this dilute sulphuric acid was charged in a bottle having a capacity of $1.1 \times 10^{-4}$ m³ (110 ml). Then, $1.5 \times 10^{-3}$ Kg (1.5 g) of sodium hydrogencarbonate wrapped with paper was put into the bottle so that the sodium hydrogencarbonate was not in direct contact with the sulphuric acid solution, and the sample cap was attached to the mouth of the bottle. Then, sodium hydrogencarbonate was completely dissolved in the solution. The bottle was placed in warm water maintained at 65°C. and kept in this state for 1 hour at 65°C. The number of bottles where gas leakage occurred was counted.

Test (6): Opening torque

In the same manner as described above in Test (5), the sample cap was attached to the mouth of the bottle, and sodium hydrogencarbonate was completely dissolved in the sulphuric acid solution. The bottle was then allowed to stand for 24 hours and the opening torque value was measured by a torque meter.

The obtained results are shown in Table 2.

7

TABLE 1

| Moulding conditions | Sample | Resin temperature | Shell temperature |
|---|---|---|---|
| 1 (present invention) | 1 | 200°C. | 190°C. |
| ditto | 2 | 150°C. | 150°C. |
| ditto | 3 | 200°C. | 190°C. |
| ditto | 4 | 150°C. | 150°C. |
| ditto | 5 | 150°C. | 150°C. |
| ditto | 6 | 150°C. | 150°C. |
| ditto | 7 | 150°C. | 150°C. |
| 2 (comparison) | 1 | 200°C. | 190°C. |
| ditto | 2 | 150°C. | 150°C. |

TABLE 1 (Continued)

| Moulding conditions | Sample | Hot pressing | |
|---|---|---|---|
| | | First pressing mould surface temperature | First anvil surface temperature |
| 1 (present invention) | 1 | 120°C. | 120°C. |
| ditto | 2 | 120°C. | 120°C. |
| ditto | 3 | 120°C. | 120°C. |
| ditto | 4 | 180°C. | 20°C. |
| ditto | 5 | 120°C. | 20°C. |
| ditto | 6 | 90°C. | 20°C. |
| ditto | 7 | 60°C. | 20°C. |
| 2 (comparison) | 1 | — | — |
| ditto | 2 | — | — |

TABLE 1 (Continued)

| Moulding conditions | Sample | Cold Pressing | |
|---|---|---|---|
| | | Second pressing mould surface temperature | Second anvil surface temperature |
| 1 (present invention) | 1 | 20°C. | 20°C. |
| ditto | 2 | 20°C. | 20°C. |
| ditto | 3 | 20°C. | 20°C. |
| ditto | 4 | 20°C. | 20°C. |
| ditto | 5 | 20°C. | 20°C. |
| ditto | 6 | 20°C. | 20°C. |
| ditto | 7 | 20°C. | 20°C. |
| 2 (comparison) | 1 | 20°C. | 20°C. |
| ditto | 2 | 20°C. | 20°C. |

TABLE 2

| Moulding conditions | Sample | Operation adaptability | In-plane orientation index difference $(I_0^P - I_0^C)$ |
|---|---|---|---|
| 1 (present invention) | 1 | ⊙ | 0.08 |
| ditto | 2 | ⊙ | 0.10 |
| ditto | 3 | ○ | 0.12 |
| ditto | 4 | ○ | 0.11 |
| ditto | 5 | ○ | 0.13 |
| ditto | 6 | △ | 0.21 |
| ditto | 7 | × | 0.36 |
| 2 (comparison) | 1 | △ | 0.30 |
| ditto | 2 | × | 0.55 |

TABLE 2 (Continued)

| Moulding conditions | Sample | Balance difference $(D_B^P - D_B^C)$ | Peel strength (Kg) |
|---|---|---|---|
| 1 (present invention) | 1 | 0.09 | 6.5 |
| ditto | 2 | 0.08 | 6.1 |
| ditto | 3 | 0.10 | 6.0 |
| ditto | 4 | 0.16 | 5.5 |
| ditto | 5 | 0.12 | 5.3 |
| ditto | 6 | 0.18 | 5.3 |
| ditto | 7 | 0.41 | 3.5 |
| 2 (comparison) | 1 | 0.21 | 1.3 |
| ditto | 2 | 0.45 | 0.5 |

TABLE 2 (Continued)

| Moulding conditions | Sample | Stress cracking resistance F50 (hours) | Opening torque (Kg-m) | Durable pressure resistance (bottles) |
|---|---|---|---|---|
| 1 (present invention) | 1 | >48 | 7.0 | 0 |
| ditto | 2 | >48 | 7.0 | 0 |
| ditto | 3 | 36 | 8.0 | 0 |
| ditto | 4 | 26 | 7.0 | 0 |
| ditto | 5 | 23 | 9.0 | 0 |
| ditto | 6 | 14 | 9.0 | 0 |
| ditto | 7 | 13 | 9.0 | 0 |
| 2 (comparison) | 1 | 15 | 15.0 | 0 |
| ditto | 2 | 0.5 | 17.0 | 2 |

Example 2

An aluminum plate having a thickness of $2.5 \times 10^{-4}$ m (0.25 mm) (JIS 1100, manufactured by Sumitomo Keikinzoku Kabushiki Kaisha) was coated in the same manner as described in Example 1 to form a coated plate. The coated plate was formed into a cap shell as shown in Fig. 5 by customary procedures so that the coated surface was located on the iner side of the cap shell. Under conditions shown in Table 3, the cap shell was heated by a high-frequency heating device, and a blend resin (homogeneous composition comprising 65 parts by weight of polyethylene having a density of $9.2 \times 10^2$ Kg/m³ (0.920 g/cc) and a melt index of 1.5, 25 parts by weight of an ethylene-propylene copolymer having a propylene content of 9%, 10 parts by weight of a styrene-butadiene-styrene block copolymer, 0.5 part by weight of stearic acid amide and 6 parts by weight of titanium white) was melted, extruded and cut into small masses by a rotary cutter, and individual masses were supplied to the central portion of the inner side of respective caps under conditions shown in Table 4. Liner-moulding conditions and amounts fed of the molten resin blend are shown in Tables 3 and 4.

The so-obtained liner-provided caps were tested to obtain results shown in Table 5.

9

**TABLE 3**

| Moulding conditions | Resin temperature | Shell temperature | Hot pressing | | Cold pressing | |
| | | | First pressing mould surface temperature | First anvil surface temperature | Second pressing mould surface temperature | Second anvil surface temperature |
|---|---|---|---|---|---|---|
| 1 (present invention) | 200°C. | 190°C. | 120°C. | 120°C. | 20°C. | 20°C. |
| 2 (comparison) | 200°C. | 190°C. | — | — | 20°C. | 20°C. |
| 3 (present invention) | 150°C. | 190°C. | 120°C. | 120°C. | 20°C. | 20°C. |
| 4 (comparison) | 150°C. | 190°C. | — | — | 20°C. | 20°C. |

**TABLE 4**

| Nominal size of cap-m(mm) | Amount fed of resin-Kg(g) | Inner diameter of cap-m(mm) |
|---|---|---|
| $1.6 \times 10^{-2}(16)$ | $1.5 \times 10^{-4}(0.15)$ | $1.485 \times 10^{-2}(14.85)$ |
| $1.8 \times 10^{-2}(18)$ | $2 \times 10^{-4}(0.2)$ | $1.59 \times 10^{-2}(15.90)$ |
| $2.8 \times 10^{-2}(28)$ | $4 \times 10^{-4}(0.4)$ | $2.52 \times 10^{-2}(25.20)$ |
| $3.8 \times 10^{-2}(38)$ | $7 \times 10^{-4}(0.7)$ | $3.495 \times 10^{-2}(34.95)$ |
| $6.3 \times 10^{-2}(63)$ | $2 \times 10^{-3}(2.0)$ | $5.875 \times 10^{-2}(58.75)$ |
| $8.2 \times 10^{-2}(82)$ | $5 \times 10^{-3}(5.0)$ | $7.595 \times 10^{-2}(75.95)$ |

TABLE 5

| Moulding conditions | Sample No. | In-plane orientation index difference $(I_O^P - I_O^C)$ | Balance difference $(D_B^P - D_B^C)$ |
|---|---|---|---|
| 1 (present invention) | 1 | 0.003 | 0.004 |
| | 2 | 10.002 | 0.005 |
| | 3 | 0.06 | 0.05 |
| | 4 | 0.15 | 0.11 |
| | 5 | 0.16 | 0.15 |
| | 6 | 0.22 | 0.27 |
| 2 (comparison) | 1 | 0.40 | 0.31 |
| | 2 | 0.42 | 0.33 |
| | 3 | 0.45 | 0.40 |
| | 4 | 0.52 | 0.45 |
| | 5 | 0.58 | 0.56 |
| | 6 | 0.80 | 0.82 |
| 3 (present invention) | 1 | 0.005 | 0.009 |
| | 2 | 0.006 | 0.008 |
| | 3 | 0.07 | 0.03 |
| | 4 | 0.17 | 0.14 |
| | 5 | 0.19 | 0.18 |
| | 6 | 0.25 | 0.27 |
| 4 (comparison) | 1 | 0.43 | 0.33 |
| | 2 | 0.44 | 0.38 |
| | 3 | 0.49 | 0.42 |
| | 4 | 0.57 | 0.48 |
| | 5 | 0.60 | 0.57 |
| | 6 | 0.88 | 0.85 |

TABLE 5 (Continued)

| Moulding conditions | Sample No. | Peel strength (Kg) | Stress cracking resistance F50 (hours) | Opening torque-Kg-m (Kg-cm) |
|---|---|---|---|---|
| 1 (present invention) | 1 | 6.43 | >48 | $5 \times 10^{-2}(5)$ |
| | 2 | 6.88 | >48 | $5 \times 10^{-2}(5)$ |
| | 3 | 6.76 | >48 | $7 \times 10^{-2}(7)$ |
| | 4 | 5.95 | >48 | $1.3 \times 10^{-1}(13)$ |
| | 5 | 6.87 | >48 | $1.5 \times 10^{-1}(15)$ |
| | 6 | 5.77 | >48 | $2.1 \times 10^{-1}(21)$ |
| 2 (comparison) | 1 | 1.33 | 1.5 | $10^{-1}(10)$ |
| | 2 | 0.77 | 1.7 | $1.3 \times 10^{-1}(13)$ |
| | 3 | 0.72 | 1.3 | $1.5 \times 10^{-1}(15)$ |
| | 4 | 0.75 | 1.0 | $3.3 \times 10^{-1}(33)$ |
| | 5 | 0.21 | 1.1 | $3.8 \times 10^{-1}(38)$ |
| | 6 | 0.11 | 0.7 | $4.5 \times 10^{-1}(45)$ |
| 3 (present invention) | 1 | 6.40 | >48 | $5 \times 10^{-2}(5)$ |
| | 2 | 7.04 | >48 | $6 \times 10^{-2}(6)$ |
| | 3 | 6.66 | >48 | $6 \times 10^{-2}(6)$ |
| | 4 | 5.25 | >48 | $1.2 \times 10^{-1}(12)$ |
| | 5 | 6.55 | >48 | $1.3 \times 10^{-1}(13)$ |
| | 6 | 5.43 | >48 | $2.2 \times 10^{-1}(22)$ |
| 4 (comparison) | 1 | 1.33 | 1.2 | $1.3 \times 10^{-1}(13)$ |
| | 2 | 0.75 | 1.1 | $1.4 \times 10^{-1}(14)$ |
| | 3 | 0.68 | 0.9 | $1.7 \times 10^{-1}(17)$ |
| | 4 | 0.73 | 0.7 | $3.5 \times 10^{-1}(35)$ |
| | 5 | 0.24 | 0.7 | $4.0 \times 10^{-1}(40)$ |
| | 6 | 0.13 | 0.4 | $4.7 \times 10^{-1}(47)$ |

## Example 3

A tinplate sheet having a thickness of $2.4 \times 10^{-4}$ m (0.24 mm) (manufactured by Shin-Nittetsu Kabushiki Kaisha) was coated in the same manner as described in Example 1 to form a coated plate. A screw cap having an inner diameter of $5.4 \times 10^{-2}$ m (54 mm) (called a "58 mm screw cap") was prepared from this coated plate so that the coated surface was located on the inner side.

The cap shell was heated at 190°C. by a high-frequency heating device, and under conditions shown in Table 6, a liner-forming material was extruded and cut into small masses (pellets) having a predetermined weight [$1.2 \times 10^{-3}$ Kg (1.2 g)] when one mass was supplied, $6 \times 10^{-4}$ Kg (0.6 g) when two masses were supplied or $3 \times 10^{-4}$ Kg (0.3 g) when four masses were supplied. The small masses were immediately placed in the sealing portion (to be brought into contact with a bottle in use) of the inner face of the cap at predetermined intervals and the masses were formed into a liner under conditions shown in Table 6 to obtain a liner-provided cap. The liner-forming material used was a homogeneous composition comprising 60 parts by weight of polyethylene having a density of $9.2 \times 10^2$ Kg/m³ (0.920 g/cc) and a melt index of 15, 20 parts by weight of an ethylene-propylene copolymer having a propylene content of 10%, 20 parts by weight of polyisobutylene, 3 parts by weight of oleic acid amide, 1 part by weight of a silicone oil (1000 CS) and 1.2 parts by weight of a colouring agent and a metal soap.

The cap prepared in this Example was different from the caps prepared in Examples 1 and 2 in the point where an annular liner was applied to a cap shell.

Results of the evaluation made on the liner-provided cap are shown in Table 7.

TABLE 6

| Moulding conditions | Resin temperature | Shell temperature | Surface temperature at hot pressing | | Surface temperature at cold pressing | |
|---|---|---|---|---|---|---|
| | | | Pressing mould | Anvil | Pressing mould | Anvil |
| 1 (present invention) | 200°C. | 190°C. | 130°C. | 130°C. | 20°C. | 20°C. |
| 2 (comparison) | 200°C. | 190°C. | — | — | 20°C. | 20°C. |

TABLE 7

| Moulding conditions | Number of applied pellets | Evaluation of annular liner | State of formation of annular liner |
|---|---|---|---|
| present invention | one | △ | cracks in welded portion |
| comparison | one | × | no annular liner formed |
| present invention | two | ○ | good annular shape |
| comparison | two | × | no annular liner formed |
| present invention | four | ⊙ | very good annular shape |
| comparison | four | △ | cracks in welded portion |

Note

⊙, ○, △, ×: see the test (4) in Example 1

## Comparative Example

In the same manner as described in Example 1, an aluminum plate was coated and formed into a cap shell. A liner was formed on the cap shell by press moulding under heating in the same manner as described in Example 1. Influences of the material of the heating pressing mould on the state of parting of the liner-forming resin pellet from the surface of the pressing mould were examined.

Low density polyethylene having a melt index of 7.5 and a density of $9.2 \times 10^2$ Kg/m³ (0.92 g/cc) was used as the liner-forming resin.

The heating pressing time was fixed to 2 seconds and the state of sticking of the resin to the pressing mould was examined. The obtained results are shown in Table 8.

TABLE 8

| Material of pressing mould | Temperature (°C) | | | | | |
|---|---|---|---|---|---|---|
| | 40 | 80 | 120 | 160 | 200 | 240 |
| Teflon (polytetrafluoroethylene) | O | O | O | O | O | O |
| Silicone (organopolysiloxane) | O | O | O | O | △ | △ |
| Meldin (polyimide) | △ | × | × | × | × | × |
| Rulon (polytetrafluoroethylene plus filler) | O | △ | △ | × | × | × |
| Zytel (nylon 66) | O | △ | × | × | × | × |
| Teflox (Teflon-coated metal) | O | O | O | O | O | O |
| Super-hard steel | O | △ | × | × | × | × |
| Hizex Million (high density polyethylene) | O | △ | × | × | × | × |

Note

O: good parting property
△: local sticking
×: sticking on the entire surface or at least 1/2 of the entire surface

## Claims

1. A process for the preparation of a vessel closure provided with a liner (13) having a projecting peripheral sealing portion by press-moulding a mass (4) of a thermoplastic resin onto the inner face of a vessel closure shell (1), characterised in that a mass (4) of a thermoplastic resin composition containing 0.01 to 10% by weight of a lubricant is located on the inner face of the vessel closure shell, the mass (4) is spread on the inner face by a punch (5) which is maintained at an elevated temperature so that the mass is molten when spread, and the spread mass (10) is press-mouled by a cooled punch (11) to form a liner (13) in which the thickness of the peripheral sealing portion (16;19) is greater than the thickness of the central portion (15;18), if any.

2. A process according to claim 1, wherein the vessel closure shell (1) is metal coated at least on the inner face thereof with a primer for thermal bonding.

3. A process according to claim 2, wherein a paint obtained by dispersing an oxidised polyethylene or acid-modified olefin resin in a film-forming resin has been employed for formation of the primer coating layer.

4. A process according to any one of the preceding claims, wherein the thermoplastic resin is an olefin resin.

5. A process according to claim 4, wherein the olefin resin is a low density polyethylene having a melt index of 0.1 to 20 g/10 min.

6. A process according to claim 5, wherein the low density polyethylene contains an ethylene-propylene copolymer or thermoplastic elastomer as a modifying component in an amount of 3 to 40% by weight based on the polyethylene.

7. A process according to any one of the preceding claims, wherein the temperature of the surface of the punch (5) which is maintained at an elevated temperature is higher than the Vicat temperature of the resin.

8. A process according to any one of the preceding claims, wherein the molten mass (4) is spread so that it covers an area which is at least 1/8 of the projection area of the final liner (13).

9. A process according to any one of the preceding claims, wherein the vessel closure shell (1) is a wide-mouthed cap having an annular liner-holding portion and the mass (4) is applied to said liner-holding portion in the form of one or more small masses or a continuous ring.

10. A bottle sealed by a vessel closure which has been prepared by a process as claimed in any one of the preceding claims.

## Patentansprüche

1. Ein Verfahren zur Herstellung eines mit einem ein vorragendes peripheres Dichtungsteil aufweisenden Einsatz (13) versehenen Gefäßverschlusses durch Preßformen einer Masse (4) eines thermoplastischen Harzes auf die Innenfläche einer Gefäßverschlußkapsel (1), dadurch gekennzeichnet, daß eine Masse (4) einer 0.01 bis 10 Gew.-% eines Gleitmittels enthaltenden thermoplastischen Harzzusammensetzung an der Innenfläche der Gefäßverschußkapsel angeordnet wird, daß die Masse (4) an der Innenfläche durch einen Stempel (5) ausgebreitet wird, der auf einer erhöhten Temperatur gehalten wird, so daß die Masse bei ihrem Ausbreiten geschmolzen wird, und daß die ausgebreitete Masse (10) durch einen gekühlten Stemple (11) zur Bildung eines Einsatzes (13), bei dem die Dicke des peripheren Dichtungsteils (16; 19) größer als die Dicke des zentralen Teils (15; 18)—falls vorhanden—ist, preßgeformt wird.

2. Ein Verfahren nach Anspruch 1, wobei die Gefäßverschlußkapsel (1) wenigstens an ihrer Innenfläche mit einem Grundiermittel für eine thermische Verbindung metallbeschichtet ist.

13

3. Ein Verfahren nach Anspruch 2, wobei ein durch Dispergieren eines oxydierten Polyäthylen- oder säuremodifizierten Olefinharzes in einem filmbildenden Harz erhaltener Überzug für die Bildung der Grundierüberzugsschicht verwendet worden ist.

4. Ein Verfahren nach einem der vorhergehenden Ansprüche, wobei das thermoplastische Harz ein Olefinharz ist.

5. Ein Verfahren nach Anspruch 4, wobei das Olefinharz ein Polyäthylen niedriger Dichte mit einem Schmelzindex von 0,1 bis 20g/10 min ist.

6. Ein Verfahren nach Anspruch 5, wobei das Polyäthylen niedriger Dichte ein Äthylen-Propylen-Kopolymer oder ein thermoplastisches Elastomer als eine Modifikationskomponente in einer Menge von 3 bis 40 Gew.-%, bezogen auf das Polyäthylen, enthält.

7. Ein Verfahren nach einem der vorhergehenden Ansprüche, wobei die Temperature der Oberfläche des Stempels (5), der auf einer erhöhten Temperatur gehalten wird, höher ist als die Vicat-Temperatur des Harzes.

8. Ein Verfahren nach einem der vorhergehenden Ansprüche, wobei die geschmolzene Masse (4) ausgebreitet wird, so daß sie einen Bereich, der wenigstens 1/8 des vorragenden Bereichs des endgültigen Einsatzes (13) beträgt, bedeckt.

9. Ein Verfahren nach einem der vorhergehenden Ansprüche, wobei die Gefäßverschlußkapsel (1) eine weit offene Kappe mit einem ringförmigen Einsatz-Halteteil ist und die Masse (4) auf das Einsatz-Halteteil in Form von einer oder mehrerer kleinen Massen oder als durchlaufender Ring aufgetragen wird.

10. Eine durch einen Gefäßverschluß, der nach einem Verfahren, wie es in irgendeinem der vorhergehenden Ansprüche beansprucht ist, hergestellt ist, dicht verschlossene Flasche.

## Revendications

1. Procédé de fabrication d'une fermeture de récipient pourvue d'une garniture (13) comportant une partie périphérique d'étanchéité en saillie par moulage par compression d'une masse (4) d'une résine thermoplastique sur la face intérieure d'une capsule (1) de fermeture de récipient, caractérisé en ce qu'une masse (4) d'une composition d'une résine thermoplastique contenant de 0,01 à 10% en poids d'un lubrifiant est placée sur la face intérieure de la capsule de fermeture de récipient, en ce que la masse (4) est étalée sur la face intérieure par un poinçon (5) qui est maintenu à une température élevée de façon que la masse soit fondue quand elle est étalée, et en ce que la masse étalée (10) est moulée par compression à l'aide d'un poinçon refroidi (11) pour former une garniture (13) dans laquelle l'épaisseur de la partie périphérique d'étanchéité (16; 19) est plus grande que l'épaisseur de la partie centrale (15; 18) si elle existe.

2. Procédé selon la revendication 1, caractérisé en ce que la capsule (1) de fermeture de récipient est en métal revêtu au moins sur sa face intérieure d'un apprêt pour liaison thermique.

3. Procédé selon la revendication 2, caractérisé en ce qu'une peinture obtenue par dispersion d'un polyéthylène oxydé ou d'une résine oléfinique modifiée à l'acide dans une résine filmogène est utilisée pour la formation de la couche de revêtement d'apprêt.

4. Procédé selon l'une quelconque des revendications précédentes, caractérisé en ce que la résine thermoplastique est une résine oléfinique.

5. Procédé selon la revendication 4, caractérisé en ce que la résine oléfinique est du polyéthylène basse densité ayant un indice de fusion allant de 0,1 à 20 g/10 min.

6. Procédé selon la revendication 5, caractérisé en ce que le polyéthylène basse densité contient un copolymère éthylène-propylène ou un élastomère thermoplastique comme constituant modificateur en quantité comprise entre 3 et 40% en poids par rapport au polyéthylène.

7. Procédé selon l'une quelconque des revendications précédentes, caractérisé en ce que la température de la surface de poinçon (5) qui est maintenue à une température élevée est supérieure à la température de Vicat de la résine.

8. Procédé selon l'une quelconque des revendications précédentes, caractérisé en ce que la masse fondue (4) est étalée de manière à recouvrir une surface qui est au moins égale à 1/8 de la surface de projection de la garniture finale (13).

9. Procédé selon l'une quelconque des revendications précédentes, caractérisé en ce que la capsule (1) de fermeture de récipient est un bouchon à large embouchure comportant une partie annulaire de support de garniture et en ce que la masse (4) est déposée sur ladite partie de support de garniture sous la forme d'une ou plusieurs masselottes ou bien sous la forme d'un anneau continu.

10. Bouteille scellée par une fermeture de récipient que a été préparée par un procédé selon l'une quelconque des revendications précédentes.

Fig. 1

Fig. 2

Fig. 3

*Fig. 4*

*Fig. 5*

*Fig. 6*

2